# EUROPEAN PATENT APPLICATION

(11) **EP 1 526 291 A1**
(43) Date of publication of application: **27.04.2005**
(21) Application number: 03023879.4
(22) Date of filing: 21.10.2003
(51) Int. Cl.: F16B 15/00, F16B 25/00

(54) **Screw nail with knives on the thread of the screw nail**

(71) Applicant: Ho, Jen-Tong, Wanli Township, Taipei County 207 (TW)
(72) Inventor: Ho, Jen-Tong, Wanli Township, Taipei County 207 (TW)
(74) Representative: Viering, Jentschura & Partner

(57) **Abstract**

A screw nail has a thread winding around the screw nail body (1). The thread (11) is formed with a plurality of sloped knives (2) which are arranged continuously or discontinuously. Each sloped knife (2) has at least one tip end (22) and at least one concave portion (21), wherein the elevation of the concave portion of the sloped knife is lower than the elevation of the tip end (22). The elevation of the sloped knife (2) is increased from the concave portion (21) to the tip end (22). The sloped knife (2) is adjacent to another sloped knife (2) so that the concave portion (21) of the sloped knife (2) is adjacent to the tip end (22) of another adjacent sloped knife (2). Preferably each sloped knife (2) is formed with a plurality of teeth (3) which are on the edge of the sloped knife (2).

## Description

### Field of the invention

The present invention relates to screw nails, and particular to a screw nail with thread. A cutting edge of the screw nail is formed with a plurality of teeth.

### Background of the invention

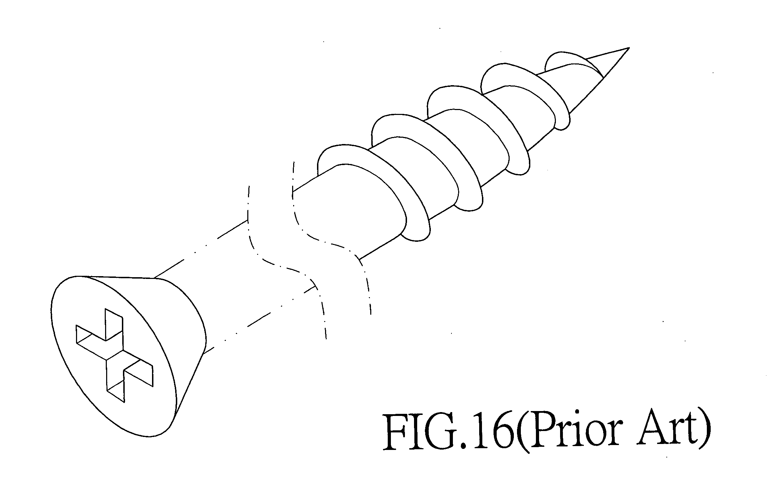

Referring to Fig. 16, a prior art screw nail is illustrated. The prior art screw nail has threads thereon. The thread 11 has a simple structure. If this kind of screw nails are locked into a hard and long wood or plastic work piece, a large force and longer time are required. It is possible that the screw nail cannot be locked into the work piece or the screw nail is buckled in the work piece. Moreover, if the force is too large, the screw nail will break so that the work piece is destroyed. Moreover, the prior art thread of screw nail is formed with a trench in the work piece so that it is easy to loose due to vibration.

### Summary of the invention

Accordingly, the primary object of the present invention is to provide a screw nail with thread. A cutting edge of the screw nail is formed with a plurality of teeth. It is known that the tip ends of the screw nail of the present invention can embedded into a work piece and then the teeth on the knives can further cut the wall embedding the screw nail so that the screw nail can screw into the work piece easily. Moreover, the sloped knife can make the screw nail to be firmly secured in the work piece.

To achieve above object, the present invention provides a screw nail having a thread winding around the screw nail body. The thread is formed with a plurality of sloped knives which are arranged continuously or discontinuously. Each sloped knife has at least one tip end and at least one concave portion, wherein the elevation of the concave portion of the sloped knife is lower than the elevation of the tip end. The elevation of the sloped knife is increased from the concave portion to the tip end. The concave portion of the sloped knife is adjacent to the tip end of another adjacent sloped knife. Each sloped knife is formed with a plurality of teeth which covers the edge of the sloped knife.

The various objects and advantages of the present invention will be more readily understood from the following detailed description when read in conjunction with the appended drawing.

### Brief Description of The Drawings

Fig. 1 is a schematic cross view of the screw nail of the present invention.
Fig. 2 is a schematic perspective view of the screw nail of the present invention.
Fig. 3 is a plane expanded view showing the thread of the screw nail according to the present invention.
Fig. 4 is a schematic cross view about the first embodiment of the teeth of the present invention.
Fig. 5 is a schematic perspective view about the first embodiment of the teeth of the present invention.
Fig. 6 is a plane explosive view about the first embodiment of the teeth of the present invention.
Fig. 7 is a schematic cross view about the second embodiment of the teeth of the present invention.
Fig. 8 is a schematic perspective view about the second embodiment of the teeth of the present invention.
Fig. 9 is a plane explosive view about the second embodiment of the teeth of the present invention.
Fig. 10 is a schematic cross view about the third embodiment of the teeth of the present invention.
Fig. 11 is a schematic perspective view about the third embodiment of the teeth of the present invention.
Fig. 12 is a plane explosive view about the third embodiment of the teeth of the present invention.
Fig. 13 is a schematic cross view about the fourth embodiment of the teeth of the present invention.
Fig. 14 is a schematic perspective view about the fourth embodiment of the teeth of the present invention.
Fig. 15 is a plane explosive view about the fourth embodiment of the teeth of the present invention.
Fig. 16 is a schematic perspective view of the prior art screw nail.

### Detailed Description of the Invention

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

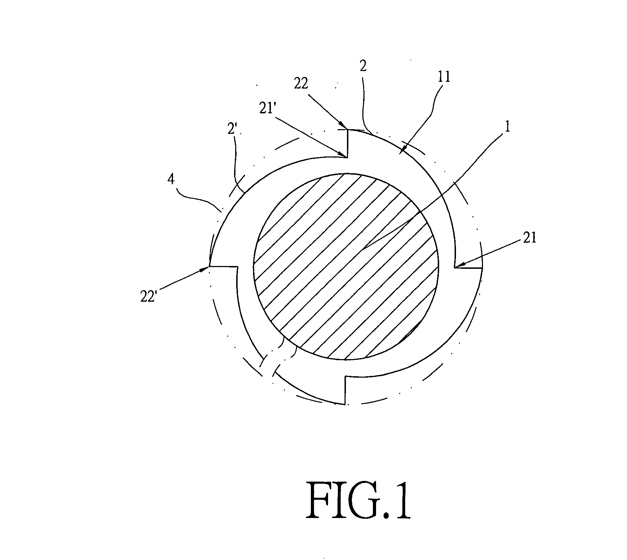

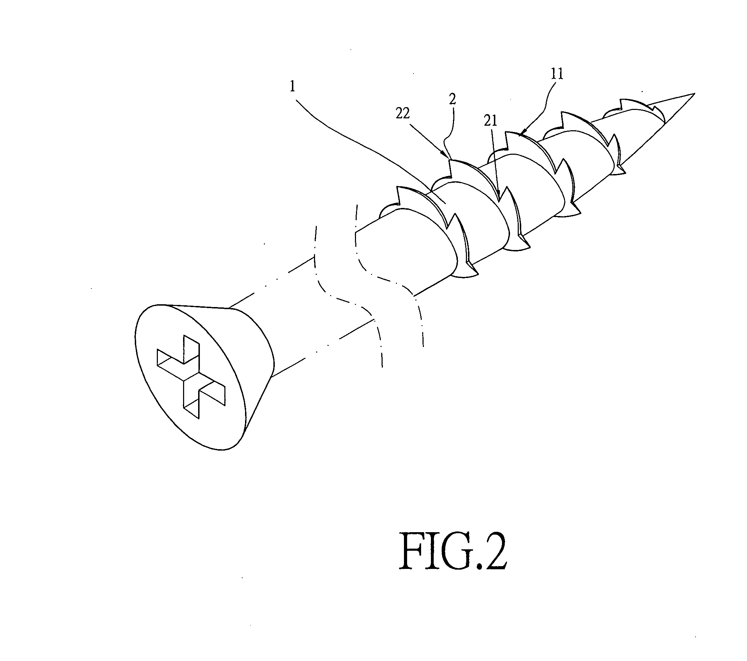

With reference to Figs. 1 to 3, the screw nail of the present invention is illustrated. A thread 11 winds around the screw nail body 1. The thread 11 is formed with a plurality of sloped knives 2 which are arranged continuously or discontinuously.

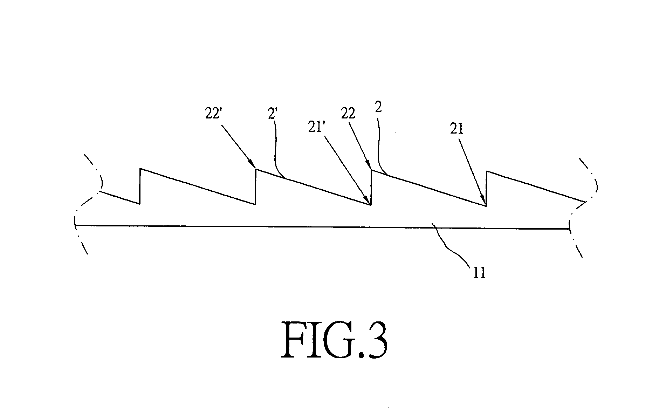

With reference to Figs. 1 and 3, each sloped knife 2 has at least one tip end 22 and at least one concave portion 21, wherein the elevation of the concave portion 21 of the sloped knife 2 is lower than the elevation of the tip end 22. The elevation of the sloped knife 2 is increased from the concave portion 21 to the tip end 22. The sloped knife 2' is adjacent to the sloped knife 2 so that the concave portion 21' of the sloped knife 2' is adjacent to the tip end 22 of the sloped knife 2.

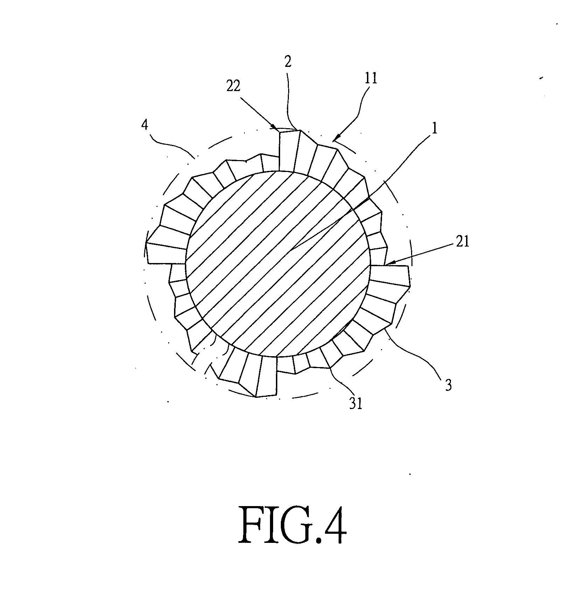

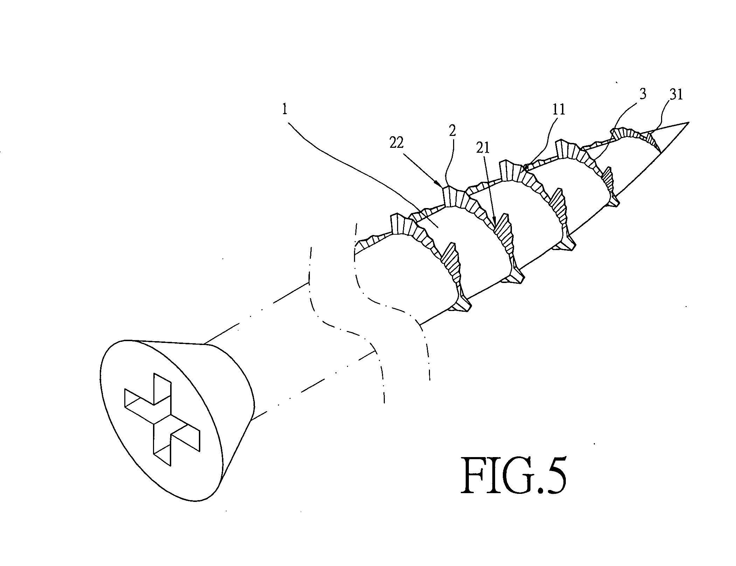

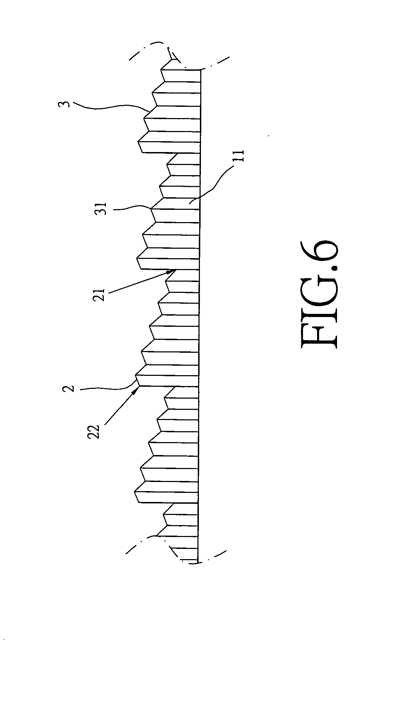

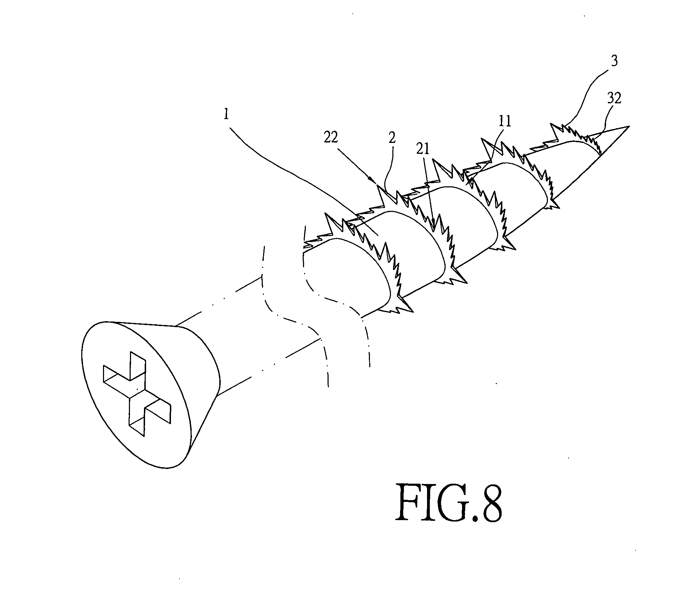

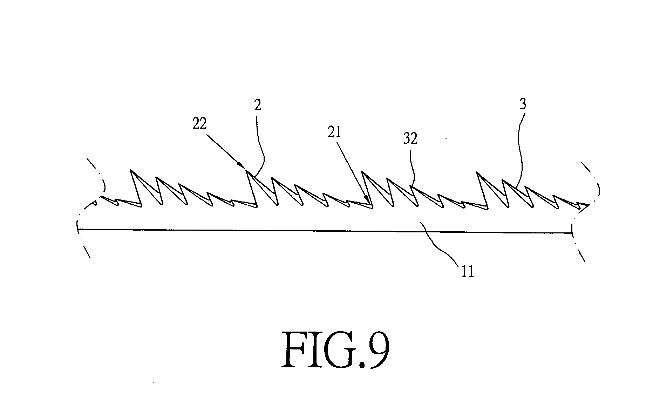

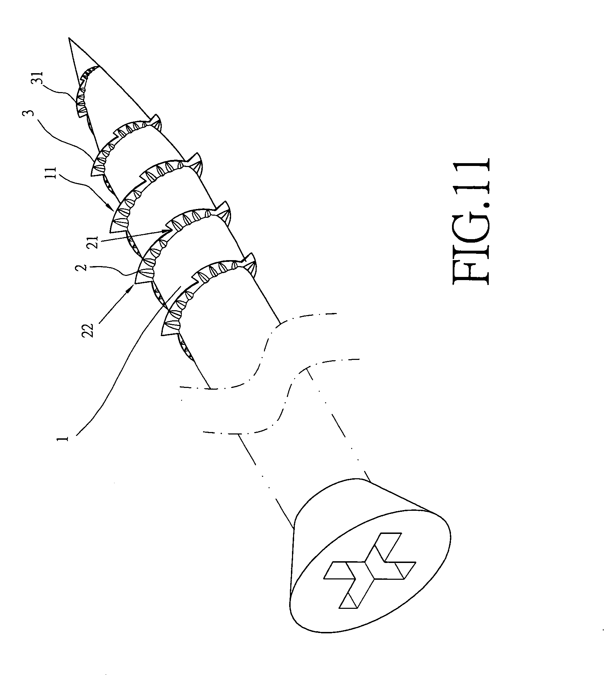

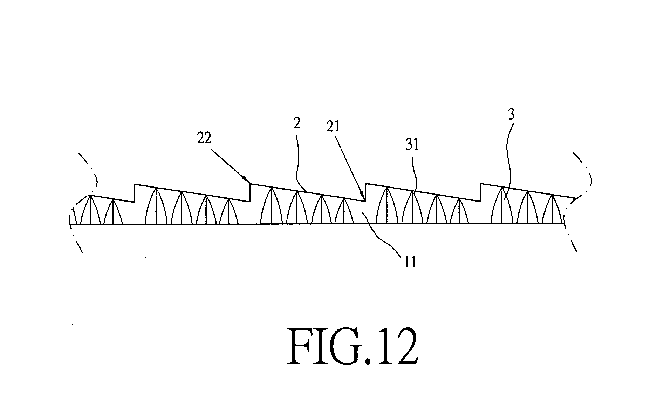

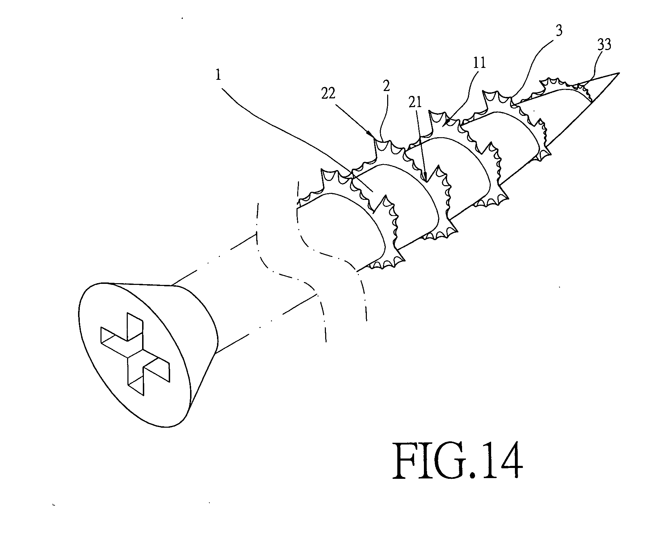

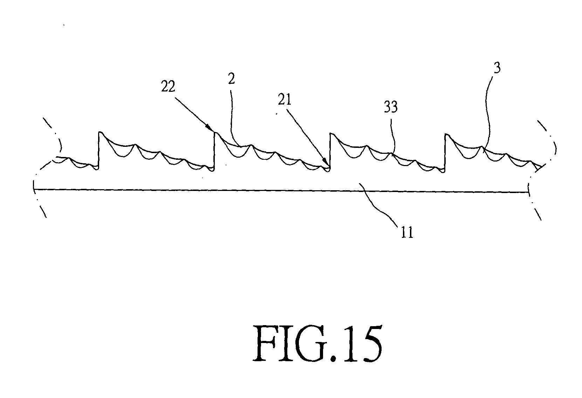

With reference to Figs. 4 to 15, in the present invention, each sloped knife 2 is formed with a plurality of teeth 3 which may be on the whole or part of the cutting edge of the sloped knife 2.

The embodiments of the teeth 3 of the present invention will be described here.

In the first embodiment shown in Figs. 4 to 6, the two lateral surfaces of the sloped knife 2 are formed as wave-like lateral sides and cutting edge has also wave-like teeth 31.

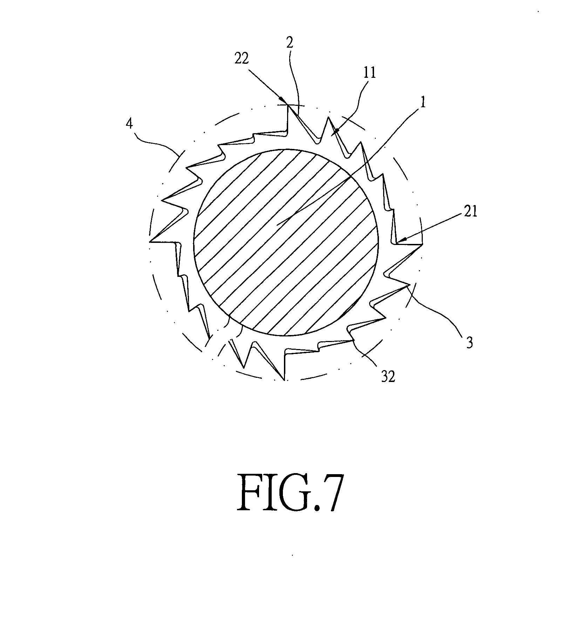

In the second embodiment shown in Figs. 7 to 9, the two lateral surfaces of the sloped knife 2 are formed as smooth sides and cutting edge has also a plurality of teeth 32, wherein the tip end of each tooth is over the extent of the base of the tooth .

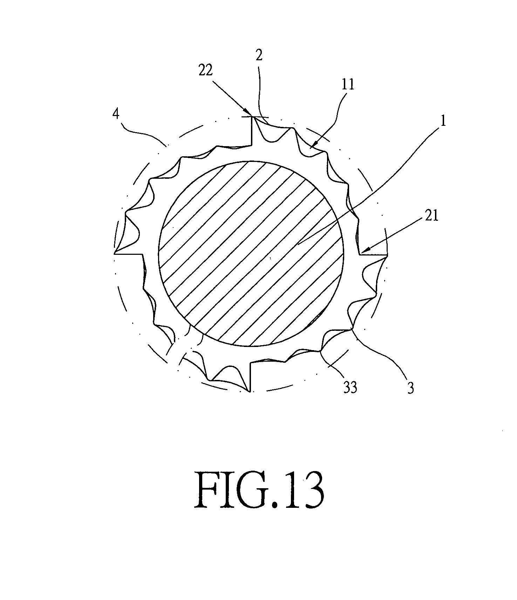

In the second embodiment shown in Figs. 13 to 15, the two lateral surfaces of the sloped knife 2 are formed as smooth sides and cutting edge has also wave-like teeth 33.

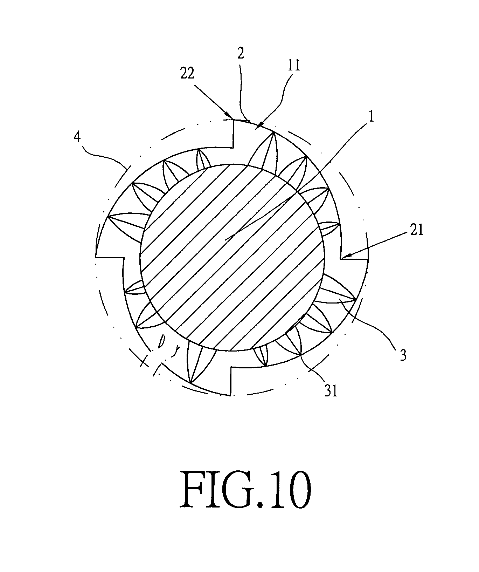

In the first embodiment shown in Figs. 10 to 12, the two lateral surfaces of the sloped knife 2 are formed as wave-like lateral sides and cutting edge is smooth.

Other than above mentioned examples, the teeth 3 of the present invention can have other shapes which are not mentioned above.

Thereby, from above description, it is known that the tip ends 22 of the screw nail of the present invention can embedded into a work piece and then the teeth on the knives can further cut the wall embedding the screw nail so that the screw nail can screw into the work piece easily. Moreover, the sloped knife can make the screw nail to be firmly secured in the work piece.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A screw nail having a thread winding around the screw nail body; the thread being formed with a plurality of sloped knives which are arranged continuously or discontinuously; each sloped knife having at least one tip end and at least one concave portion, wherein the elevation of the concave portion of the sloped knife is lower than the elevation of the tip end; the elevation of the sloped knife is increased from the concave portion to the tip end; and the concave portion of the sloped knife is adjacent to the tip end of another adjacent sloped knife.

2. The screw nail as claimed in claim 1, wherein each sloped knife is formed with a plurality of teeth which are on the cutting edge of the sloped knife.

3. The screw nail as claimed in claim 2, wherein the two lateral surfaces of each sloped knife are formed as wave-like lateral sides and the cutting edge each sloped knife has wave-like teeth.

4. The screw nail as claimed in claim 2, wherein the two lateral surfaces of the sloped knife are formed as smooth sides and the cutting edge of each sloped knife has also a plurality of teeth, wherein the tip end of each tooth is over the extent of the base of the tooth.

5. The screw nail as claimed in claim 2, wherein the two lateral surfaces of the sloped knife are formed as smooth sides and the cutting edge of each sloped knife has also wave-like teeth.

6. The screw nail as claimed in claim 1, wherein the plurality of teeth are on the whole or a part of the edge of the sloped knife.

7. The screw nail as claimed in claim 1, wherein the two lateral surfaces of the sloped knife are formed as wave-like lateral sides and cutting edge is smooth.
